Europäisches Patentamt

European Patent Office

Office européen des brevets

(19)

‖‖‖‖‖‖‖‖‖‖‖‖‖‖‖‖‖‖‖‖‖‖‖‖‖‖‖

(11) Veröffentlichungsnummer : **0 384 337 B1**

(12) **EUROPÄISCHE PATENTSCHRIFT**

(45) Veröffentlichungstag der Patentschrift :
**18.10.95 Patentblatt 95/42**

(51) Int. Cl.$^6$: **G01N 21/31,** G01N 21/72,
G01N 35/08

(21) Anmeldenummer : **90103110.4**

(22) Anmeldetag : **19.02.90**

(54) Verfahren zur Konzentrationsbestimmung mittels Atomabsorptions-Spektroskopie.

(30) Priorität : **24.02.89 DE 3905782**

(43) Veröffentlichungstag der Anmeldung :
**29.08.90 Patentblatt 90/35**

(45) Bekanntmachung des Hinweises auf die
Patenterteilung :
**18.10.95 Patentblatt 95/42**

(84) Benannte Vertragsstaaten :
**DE GB NL SE**

(56) Entgegenhaltungen :
**ANAL. CHEM., Band 57, 1985, Seiten
1457-1461; F. ZHAOLUN et al.: "Simultaneous
flame photometric determination of lithium,
sodium, potassium, and calcium by flow injection analysis with gradient scanning standard
addition"
TrAC/TRENDS IN ANALYTICAL CHEMISTRY,
Band 6, Nr. 7, August 1987, Seiten 165-168;
G.E. PACEY et al.: "Flow injection analysis:
beyond the laboratory curiosity stage"**

(56) Entgegenhaltungen :
**TrAC: TRENDS IN ANALYTICAL CHEMISTRY,
Band 4, Nr. 5, Mai 1985, Seiten 124-128;J.
TYSON: "Flow injection techniques for flame
atomic absorption spectrophotometry"
LABORATORY MICROCOMPUTER, Band 9, Nr.
2, Seiten 44-49; C. PASQUINI et al.: "A simple
data acquisition system for fast standard additions using Flow injection analysis"
PATENT ABSTRACTS OF JAPAN, Band 9, Nr.
296 (P-407)[2019], 22. November 1985; & JP-
A-60 133 356**

(73) Patentinhaber : **BODENSEEWERK
PERKIN-ELMER GMBH
Askaniaweg 4
D-88662 Überlingen (DE)**

(72) Erfinder : **Sperling, Michael, Dr.
Im Leimacker 12
D-7702 Sipplingen (DE)**

(74) Vertreter : **Grünecker, Kinkeldey, Stockmair &
Schwanhäusser Anwaltssozietät
Maximilianstrasse 58
D-80538 München (DE)**

EP 0 384 337 B1

**Beschreibung**

**Technisches Gebiet**

Die Erfindung betrifft ein Verfahren zur Konzentrationsbestimmung mittels Atomabsorptions - Spektroskopie, wobei die Probe durch Fließinjektionstechnik einer kontinuierlich arbeitenden Atomisierungseinrichtung eines Atomabsorptions - Spektrometers zugeführt wird und ein transientes Ausgangssignal des Atomabsorptions - Spektrometers erzeugt.

**Zugrundeliegender Stand der Technik**

Atomabsorptions - Spektroskopie ist ein Verfahren zur Bestimmung der Konzentration eines gesuchten Elements in einer zu analysierenden Probe. Durch eine Atomisierungsvorrichtung, z.B. einen Brenner mit einer Flamme, wird die zu analysierende Probe "atomisiert". Die Bestandteile der Probe liegen dann in atomarem Zustand vor. Durch die so atomisierte Probe wird ein Meßlichtbündel geleitet. Das Meßlichtbündel wird von einer linienemittierenden Lichtquelle, z.B. einer Hohlkathodenlampe, erzeugt. Die Spektrallinien des Meßlichtbündels entsprechen den Resonanzlinien des gesuchten Elements. Daher hängt die Absorption, welche das Meßlichtbündel in der atomisierten Probe erfährt, von der Anzahl der Atome des gesuchten Elements und damit von der Konzentration dieses Elements in der Probe ab. Das Meßlichtbündel fällt auf einen Detektor, der ein entsprechendes Signal liefert. Mittels einer Eichprobe kann dieses Signal so geeicht werden, daß es die Konzentration der Probe liefert.

Die Konzentration des gesuchten Elements in der Probe muß dabei innerhalb eines bestimmten Meßbereiches liegen. Wenn die Konzentration zu gering ist, wird das Signal am Detektor zu klein und geht im Rauschen unter. Wenn die Konzentration zu groß wird, wird das Meßlichtbündel praktisch vollständig absorbiert, so daß auch keine Messung mehr möglich ist. Dazwischen liegt ein Meßbereich, in welchem das Signal am Detektor bzw. die Konzentration des gesuchten Elements mit der kleinstmöglichen Standardabweichung bestimmt wird. Dieser Bereich liegt oberhalb des linearen Meßbereichs des Atomabsorptions Spektrometers, der unterhalb einer optischen Dichte von 0,1 liegt und daher mit einem ungünstigen SignalRausch-Verhältnis belastet ist, das relativ hohe Standardabweichungen ergibt. Die Probe muß daher ggf. so verdünnt werden, daß die Konzentration des gesuchten Elements innerhalb dieses optimalen Meßbereichs liegt.

Es ist bekannt, Proben zu einer Atomisierungsvorrichtung eines Atomabsorptions - Spektrometers durch "Fließinjektion" zuzuführen. Dabei wird die Probe in eine Rohrschleife eingebracht. Der Atomisierungsvorrichtung wird ein ständiger Trägerflüssigkeitsstrom zugeführt. Durch ein Umschaltventil (Injektionsventil) wird die Schleife dann in den Trägerflüssigkeitsstrom eingeschaltet. Die Probe wird so von dem Trägerflüssigkeitsstrom aus der Rohrschleife zu der Atomisierungsvorrichtung geleitet. Dabei bildet die Probe einen Pfropfen in dem Trägerflüssigkeitsstrom. Dieser Pfropfen läuft auf dem Wege zu der Atomisierungsvorrichtung zu einer etwa glockenförmigen Konzentrationsverteilung von Probenflüssigkeit in Trägerflüssigkeit auseinander. Dementsprechend liefert das Atomabsorptions - Spektrometer ein transientes Signal in Form eines etwa glockenförmigen Peaks. Die Form dieses Peaks ist innerhalb des linearen Meßbereiches für alle Konzentrationen des gesuchten Elements die gleiche. Die Peaks unterscheiden sich nur durch die konzentrationsproportionale Ordinate.

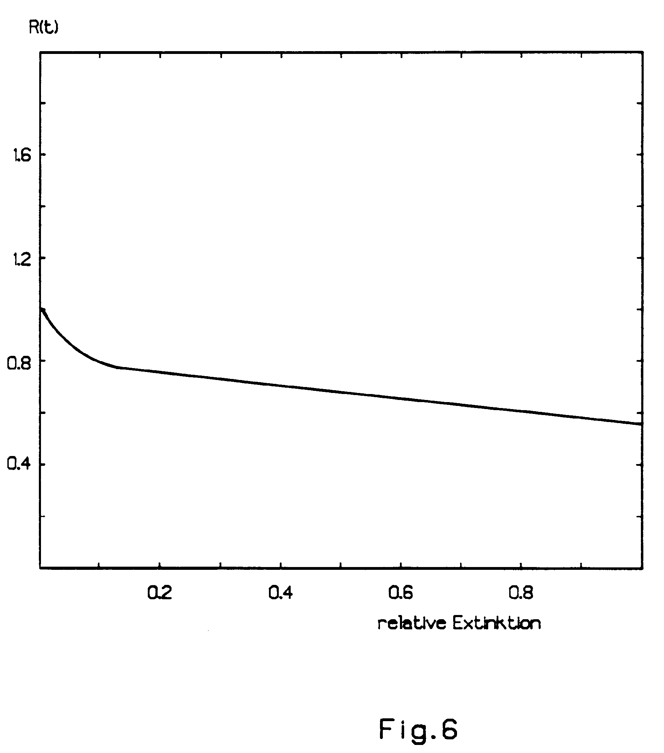

Durch einen Aufsatz von Olsen, Ruzicka und Hansen "Gradient Techniques in Flow Injection Analysis" in "Analytica Chimica Acta" 136 (1982) 101-112, insbesondere Fig.6 und 7 und den zugehörigen Text auf Seite 108-109, ist ein Verfahren zur Erzeugung einer Schar von Eichkurven mit unterschiedlichen Verdünnungen der Probe bekannt. Es werden dort mehrere Eichproben vermessen, in denen das gesuchte Element in unterschiedlichen Konzentrationen vorhanden ist. Es ergeben sich Signalpeaks im wesentlichen gleicher Zeitabhängigkeit aber unterschiedlicher Amplitude. Die Signale werden auf der abfallenden Flanke der Signalpeaks zu verschiedenen Abtastzeitpunkten, jeweils bezogen auf den Zeitpunkt des Signalmaximums abgetastet. Jeder dieser Abtastzeitpunkte liefert dann eine Eichkurve, die einer anderen Verdünnung der Probe entspricht. Das Signal einer unbekannten Probe wird dann in einem solchen Abtastzeitpunkt abgetastet, in welchem die Amplitude ihres Signalpeaks in dem linearen Meßbereich liegt. Die Verdünnung der Probe wird somit durch die Wahl des Abtastzeitpunktes ersetzt. Man spricht dabei von "Electronic Dilution", also "elektronischer Verdünnung".

In dem Aufsatz von Pacey und Bubnis "Flow injection analysis: beyond the laboratory curiosity stage" in Trends in Analytical Chemistry, Vol. 6, No. 7, 1987, Seiten 165-168, wird ebenfalls auf die "elektronische Verdünnung" eingegangen. Auch in diesem Aufsatz wird ausdrücklich auf die Erzeugung mehrerer Kalibrationskurven hingewiesen (Seite 167, Spalte 2, Zeile 20).

Fang et al. stellen in Anal. Chem. 1985, 57, Seiten 1457-1461, eine Anwendung der "elektronischen Verdünnungsmethode", bei der für verschiedene Meßzeitpunkte unterschiedliche Kalibrationsfunktionen erstellt und abgespeichert werden müssen, vor. Ein erweiterter Meßbereich kommt gemäß diesem Verfahren dadurch zustande, daß für unterschiedlich konzentrierte Proben zu unterschiedlichen Zeiten gemessen wird, wobei die entsprechende Kalibrationskurve für die verwendete Zeit zur Anwendung kommt.

Diese "elektronische Verdünnung" ist auch beschrieben in "Fresenius Zeitschrift für Analytische Chemie" (1988, 329:678-684).

Durch einen Aufsatz von B.V. L'vov "Graphite Furnace Atomic Absorption Spectrometry on the Way to Absolute Analysis" in "J. Anal. At. Spectrom.", 3 (1988), 9-12 ist ein Verfahren zur Bestimmung der Konzentration eines gesuchten Elements in einer Probe mittels Atomabsorptions-Spektroskopie bekannt, bei welchem eine elektrothermische Atomisierung der Probe erfolgt. Dabei wird eine Probe in einen Graphitofen eingebracht. Der Graphitofen wird auf hohe Temperatur aufgeheizt. Dabei bildet sich in dem Graphitofen eine "Atomwolke" aus, in welcher die Bestandteile der Probe in atomarer Form vorliegen. Das Meßlichtbündel wird durch den Graphitofen hindurchgeleitet. Auch hierbei ergibt sich ein glockenförmiges, transientes Signal. Die Probe wird atomisiert, wodurch das Signal ansteigt, und der Atomdampf wird anschließend durch Diffusion aus dem Graphitofen abtransportiert, wodurch das Signal wieder abfällt.

Bei dem von L'vov beschriebenen Verfahren werden zwei Eichlösungen verwendet. Eine erste Eichlösung enthält das gesuchte Element in einer relativ niedrigen Konzentration, allerdings hinreichend weit über der Nachweisgrenze. Diese Eichlösung erzeugt ein Signal in dem linearen Bereich des Atomabsorptions - Spektrometers. Die zweite Eichlösung enthält das gesuchte Element in einer Konzentration, die am oberen Ende des Bestimmungsbereiches liegt. Der mit der zweiten Eichlösung erhaltene Signalverlauf wird nun Punkt für Punkt mit dem entsprechenden Signal verglichen, das mit der ersten Eichlösung erhalten wurde. Wenn das Atomabsorptions - Spektrometer über den gesamten Bestimmungsbereich hinweg linear arbeiten würde, müßten sich die Signale in jedem Zeitpunkt wie die Kon zentrationen der beiden Eichlösungen verhalten. Aus der Abweichung des tatsächlich mit der zweiten Eichlösung gemessenen Signals von dem unter Zugrundelegung einer linearen Eichkurve berechneten Wert kann durch Regressionsrechnung eine Eichkurve bestimmt werden. Mittels dieser Eichkurve kann dann der Signalverlauf einer unbekannten Probe linearisiert werden. Aus dem so linearisierten Signalverlauf kann zur Signalauswertung entweder die Peakhöhe oder die Peakfläche bestimmt werden.

## Offenbarung der Erfindung

Der Erfindung liegt die Aufgabe zugrunde, bei einem mit Fließinjektionstechnik arbeitenden Verfahren der eingangs genannten Art eine Eichung mit einer einzigen Eichlösung vorzunehmen.

Eine weitere Aufgabe der Erfindung besteht darin, unter Anwendung der Fließinjektionstechnik ein Verfahren der eingangs genannten Art zu schaffen, das einen on-line Betrieb des Atomabsorptions-Spektrometers ermöglicht und trotz hohem Probendurchsatz hinreichend genaue Konzentrationsbestimmungen gestattet.

Erfindungsgemäß wird diese Aufgabe gelöst durch die Verfahrensschritte:

(a) Zuführen einer Eichprobe mit bekannter Konzentration des gesuchten Elements zu einem Atomabsorptions Spektrometer durch Fließinjektion, wobei die Konzentration des gesuchten Elements in dieser Probe in einem Bereich liegt, in dem diese Konzentration mit kleinstmöglicher Standardabweichung bestimmbar ist,

(b) Abspeichern des dabei erhaltenen transienten Vergleichssignals,

(c) Zuführen einer zu analysierenden Probe mit unbekannter Konzentration des gesuchten Elements zu dem Atomabsorptions - Spektrometer durch Fließinjektion,

(d) Messen eines dabei erhaltenen transienten Probensignals,

(e) Bilden von Verhältniswerten des Probensignals und des Vergleichssignals zu einander entsprechenden, vorgegebenen Zeitpunkt des transienten Probesignals und des transienten Vergleichssignals, und

(f) Bestimmen der Konzentration des gesuchten Elements in der zu analysierenden Probe aus diesen Verhältniswerten, indem die Verhältniswerte als Funktion der Extinktion einer Regressionsanalyse unterworfen werden und als Ergebnis der Regressionsanalyse ein auf die Extinktion 0 extrapolierter Verhältniswert erhalten wird.

Es wird somit nur eine einzige Eichprobe mit bekannter Konzentration des gesuchten Elements benötigt. Die bekannte Konzentration wird so gewählt, daß die gemessene Absorption einschließlich des Peakmaximums innerhalb des Bereichs liegt, in dem diese Konzentration mit der kleinstmöglichen Standardabweichung bestimmbar ist.

Es wird dann ein Probensignal von der zu analysierenden Probe gemessen. Das Vergleichssignal wie das Probensignal bilden ein transientes, glockenförmiges Signal, das unter weitgehend gleichen Bedingungen der Fließinjektion zeitabhängig gemessen wird. Die Konzentration des gesuchten Elementes in der zu analysierenden Probe ergibt sich dann unmittelbar aus dem Verhältniswert des Probensignals und des Vergleichssignals zu vergleichbaren Zeitpunkten. Durch die Bildung der Verhältniswerte ist das erfindungsgemäße Verfahren nicht auf den linearen Meßbereich des Atomabsorptions-Spektrometers beschränkt, in dem nur eine relativ geringe Anzahl von Meßwerten zur Verfügung steht, die noch dazu mit einem schlechten Signal-zu-Rausch-Verhältnis behaftet sind. Das erfindungsgemäße Verfahren verarbeitet unter Verwendung nur einer Eichprobe eine wesentlich größere Anzahl von Meßwerten, da es auch den nichtlinearen Meßbereich des Atomabsorptions-Spektrometers umfaßt, und ermöglicht eine erheblich verbesserte Meßgenauigkeit dank des günstigen Signal-zu-Rausch-Verhältnisses und der geringen Standardabweichungen der in diesem nichtlinearen Meßbereich liegenden Meßwerte.

Nichtlinearitäten können auch durch Matrixeffekte verursacht werden. Matrixeffekte sind meistens von der absoluten Konzentration der Matrix abhängig und nicht von dem Verhältnis der Konzentrationen von gesuchtem Element und Matrix. Daher können Matrixeffekte durch Verdünnen der Probe vermindert werden. Das transiente Signal enthält zwar auch die Information über die stark verdünnte Probe, nämlich an Meßpunkten, die zeitlich relativ weit hinter dem Peakmaximum liegen. In diesem Bereich ist jedoch das Signal-zu-Rausch-Verhältnis sehr ungünstig und damit die Standardabweichung zu hoch.

In dem Verfahren nach der Erfindung ist vorgesehen, die ermittelten Verhältniswerte nach geeigneter Transformation als Funktion der Extinktion einer linearen, vorzugsweise einer gewichteten linearen Regressionsanalyse zu unterwerfen.

Dabei können alle Werte mit einer Standardabweichung oberhalb eines vorgegebenen Schwellenwertes unterdrückt werden. Es wird so im on-line Betrieb ein auf die Extinktion 0 extrapolierter Verhältniswert mit guter Standardabweichung erhalten, der praktisch von Nichtlinearitäten der Extinktionsmessung und von Matrixeffekten unabhängig ist.

## Kurze Beschreibung der Zeichnungen

Fig. 1 zeigt schematisch ein Atomabsorptions - Spektrometer mit einer Flamme als Atomisierungsvorrichtung und Probenzufuhr durch Fließinjektion.

Fig. 2 zeigt als Funktion der Zeit einen Signalverlauf wie er mit einer Eichprobe im optimalen Meßbereich und mit einer zu analysierenden Probe mit wesentlich höherer Konzentration des gesuchten Elements mit der Anordnung von Fig. 1 erhalten wird.

Fig. 3 zeigt ein Flußdiagramm für die Auswertung der Meßdaten nach dem erfindungsgemäßen Verfahren.

Fig. 4 zeigt eine nach dem erfindungsgemäßen Verfahren bestimmte Eichkurve im Vergleich zu nach anderen Verfahren erhaltenen Eichkurven.

Fig. 5 zeigt den ermittelten Verhältniswert als Funktion der relativen Extinktion in Abwesenheit eines Matrixeffektes; und

Fig. 6 zeigt den ermittelten Verhältniswert als Funktion der relativen Extinktion in Anwesenheit eines Matrixeffektes.

## Bevorzugte Ausführung der Erfindung

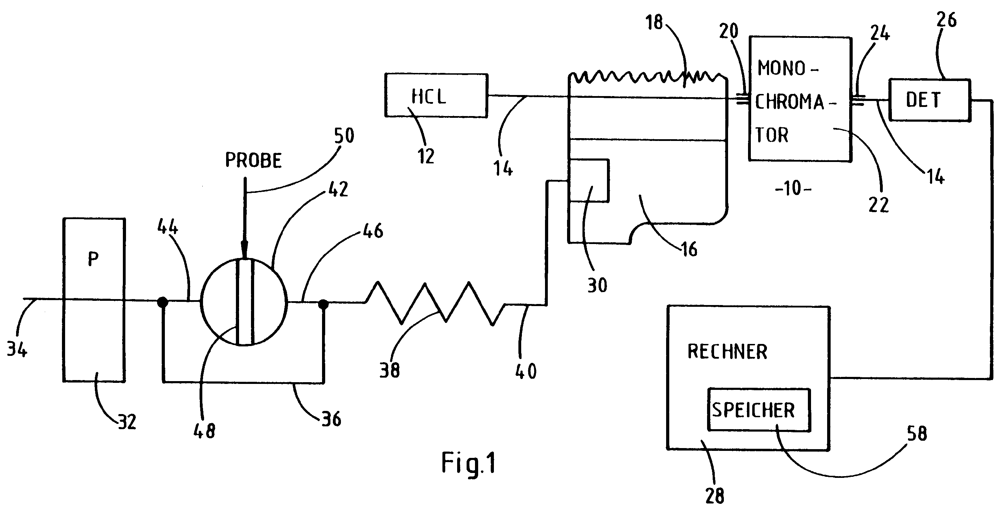

In Fig.1 ist eine Vorrichtung zur Bestimmung der Konzentration eines gesuchten Elements in einer zu analysierenden Probe mittels Atomabsorptions - Spektrometrie dargestellt. Die Vorrichtung enthält ein sehr stark schematisch dargestelltes Atomabsorptions-Spektrometer 10. Das Atomabsorptions-Spektrometer 10 enthält eine linienemittierende Lichtquelle 12 in Form einer Hohlkathodenlampe, welche ein Meßlichtbündel 14 aussendet. Eine Atomisierungsvorrichtung 16 ist von einem Brenner gebildet. Auf dem Brenner brennt eine Flamme 18. Das Meßlichtbündel 14 tritt durch die Flamme und fällt auf den Eintrittsspalt 20 eines Monochromators 22. Der Monochromator 22 läßt aus dem gesamten Spektrum nur einen engen Spektralbereich um eine bestimmte Linie des von der Lichtquelle 12 emittierten Linienspektrums zu einem Austrittsspalt 24 durch. Das aus dem Austrittsspalt 24 austretende Meßlichtbündel 14 fällt auf einen Detektor 26. Das Signal des Detektors 26 ist auf einen Rechner 28 geschaltet. Der Rechner 28 ist zur Durchführung der unten beschriebenen Signalverarbeitung programmiert oder sonstwie eingerichtet.

Der Brenner 16 enthält einen Zerstäuber 30. Auf den Zerstäuber 30 wird von einer Schlauchpumpe 32 über eine Leitung 34, eine Umgehungsleitung 36, eine Mischwendel 38 und eine Leitung 40 ein Trägerflüssigkeitsstrom zugeführt. Die Trägerflüssigkeit kann beispielsweise de-ionisiertes Wasser sein. Die Umgehungsleitung 36 umgeht ein Umschaltventil oder Injektorventil 42. Das Umschaltventil 42 ist parallel zu der Umgehungsleitung 36 mit zwei Anschlüssen 44 und 46 in die Leitung 34 eingeschaltet. In Fig. 1 ist das Umschaltventil 42 in einer Stellung gezeigt, in welcher es die Verbindung zwischen den Anschlüssen 44 und 46 absperrt. Durch das Umschaltventil 42 ist in seiner zweiten Schaltstellung eine Rohrschleife 48 in die Leitung 34 einschaltbar.

In der dargestellten ersten Schaltstellung wird in die Rohrschleife 48 eine Probe eingebracht, wie durch Pfeil 50 angedeutet ist. Das kann eine Eichprobe bekannter Konzentration des gesuchten Elementes oder eine zu analysierende Probe unbekannter Konzentration sein. Wenn dann das Umschaltventil 42 in seine zweite Schaltstellung umgeschaltet wird, wird die Probe von dem Trägerflüssigkeitsstrom aus der Rohrschleife 48 herausgespült und über die Mischwendel 38 und Leitung 40 zu dem Zerstäuber 30 transportiert. Die Probenflüssigkeit wird dann in die Flamme 18 eingesprüht und atomisiert.

In der Flamme liegen daher die Bestandteile der Probe in atomarer Form vor. Das Meßlichtbündel 14 wird durch die Atome desjenigen Elementes geschwächt, dessen Linienspektrum von der Lichtquelle 12 emittiert wird. Die Schwächung des Meßlichtbündels 14 liefert ein Detektorsignal.

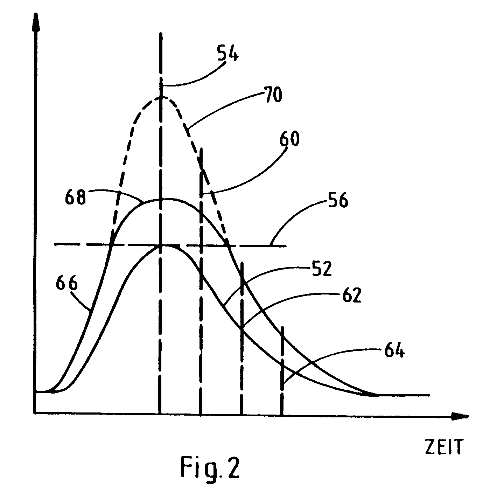

Auf dem Wege von der Rohrschleife 48 zum Zerstäuber erfährt der Pfropfen von Probensubstanz eine "Dispersion", er läuft auseinander und bildet eine etwa glockenförmige Konzentrationsverteilung. Es werden also nacheinander alle Konzentrationen von der Konzentration null über einen Maximalwert zurück zur Konzentration null durchlaufen. Dementsprechend ergeben sich an dem Detektor 26 zeitabhängige Extinktionen oder Signalverläufe von etwa glockenförmiger, leicht unsymmetrischer Gestalt. Solche Signalverläufe sind in Fig.2 für zwei verschiedene Konzentrationen dargestellt.

Mit 52 in Fig.2 ist transientes Vergleichssignal bezeichnet, das ist ein Signalverlauf des Signals am Detektor 26, der mit einer Eichprobe bekannter Konzentration des gesuchten Elementes erhalten wird. Die Konzentration des gesuchten Elementes ist so gewählt, daß das Signal des Detektors 26 vollständig in dem Bereich liegt, in dem die Standardabweichung des gemessenen Konzentrationswertes minimal ist. Im Peakmaximum, dessen Zeitpunkt durch eine vertikale Linie 54 markiert ist, nimmt das Signal einen Wert an, der durch die horizontale Linie 56 gekennzeichnet ist. Unterhalb der Linie 56 liegt der gewünschte Bereich, in dem der gemessene Wert die kleinstmögliche Standardabweichung hat. Vom Peakmaximum aus fällt das Signal ab. Das bedeutet, daß die Probe mit zunehmendem Abstand von dem Peakmaximum zunehmend stärker verdünnt wird. Der Verlauf des Signals wird in definierten Zeitpunkten, zum Beispiel alle 20 ms abgetastet und in einem Speicher 58 im Rechner 28 gespeichert. Die Zeitpunkte 60,62,64 liegen nach dem Zeitpunkt 54 des Peakmaximums und sind hier vereinfacht durch die vertikalen Linien 60,62,64 dargestellt.

Es wird dann eine zu analysierende Probe in gleicher Weise über die Rohrschleife 48 und den Zerstäuber 30 in die Flamme geleitet und atomisiert, wodurch am Detektor 26 ein Signalverlauf entsprechend einem transienten Probensignal 66 erhalten wird. Die Konzentration des gesuchten Elements in der Probe sei so groß, daß der vorgenannte Bereich minimaler Standardabweichung unterhalb der Linie 56 überschritten wird. Erhöhungen der Konzentration über den Wert der Linie 56 hinaus führen dann zu ungenaueren Meßwerten höherer Standardabweichung mit nichtlinearen, geringeren Zunahmen der Extinktion mit zunehmender Konzentration, so daß der Signalverlauf 66 in einem Bereich 68 um das Peakmaximum herum abgeflacht ist. Kurve 70 wäre beispielsweise der theoretische Signalverlauf proportional zur Konzentration in der zu analysierenden Probe.

Es kann nun die Konzentration des gesuchten Elements in der Probe aus dem Verhältnis der Signale unterhalb der Linie 56 zu den Zeitpunkten 62 und 64 bestimmt werden. In diesem Bereich ist die gewünschte minimale Standardabweichung gewährleistet. Zur weiteren Verbesserung der Meßgenauigkeit kann das Vergleichssignal als Mittelwert aus einer Mehrzahl von beispielsweise 5 transienten Vergleichssignalen 52 gebildet werden.

Bei dem nachfolgend beschriebenen, praktischen Ausführungsbeispiel, das nach Abspeichern des transienten Vergleichssignals einen fortlaufenden Probendurchsatz und eine Auswertung der transienten Probensignale im on-line Betrieb gestattet, werden das Vergleichssignal und das Probensignal unter vergleichbaren Bedingungen der Fließinjektion gemessen. Dabei ist das Fließinjektionssystem insbesondere durch die Konstruktion der Mischwendel 38 so ausgebildet, daß weitgehend symmetrisch zum Maximum verlaufende transiente Signale erhalten werden. Die Mischwendel 38 kann beispielsweise von der Art sein, wie sie in der Veröffentlichung von H. Engelhardt und U. D. Neue, Chromatographia 15, 1982, S. 403 unter dem Titel "Reaction Detector with Threedimensional Coiled Open Tubes in HPLC" beschrieben ist. Weiterhin kann für die Bestimmung der Verhältniswerte eine Überlagerung des Vergleichssignals und des Probensignals in der Weise vorgenommen werden, daß die Differenz zwischen den Verhältniswerten, die auf der ansteigenden Flanke und auf der abfallenden Flanke der Signale ermittelt werden, minimal ist. Schließlich können durch eine gewichtete lineare Regressionsanalyse alle Verhältniswerte mit unzulässig hohen Standardabweichungen unterdrückt werden und eine Extrapolation auf die Extinktion 0 vorgenommen werden. Auf diese Weise werden Konzentrationswerte erhalten, die nicht das Arbeiten im optimalen Meßbereich des Atomabsorptions-Spektrometers erfordern und in denen die Einflüsse von Unregelmäßigkeiten des Fließinjektionssystems, von Nichtlinearitäten und von Matrixeffekten minimiert sind.

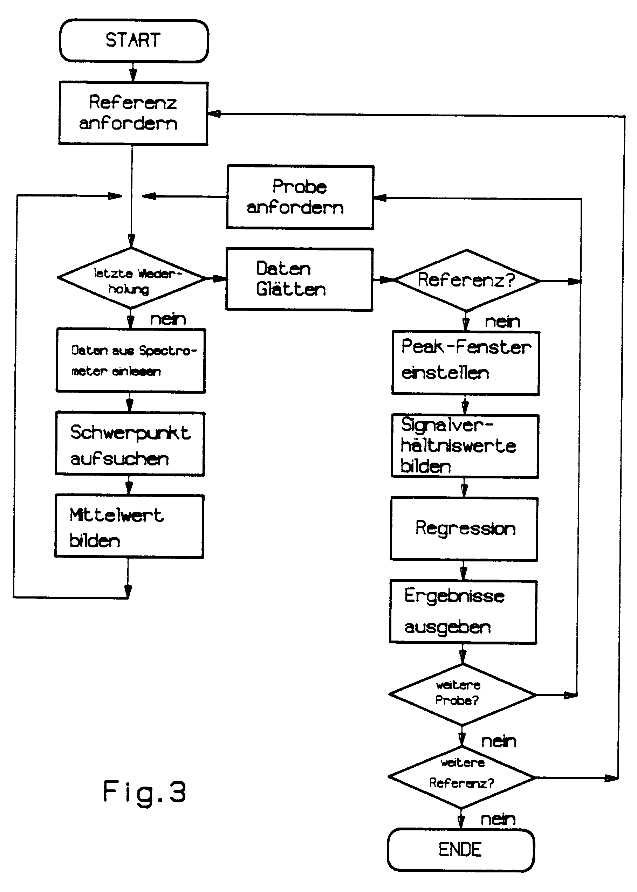

In dem praktischen Ausführungsbeispiel wird die Atomabsorption von Calcium in wäßriger Lösung (0,4 bis 40 mg/l; doppelt deionisiertes Wasser; pH 3 mit unter Siedepunkt destillierter Salpetersäure) in Anwesenheit und Abwesenheit von Phosphat gemessen (Perkin-Elmer 3030 B Atomabsorptionsspektrometer; Calcium-Hohlkathodenlampe (Lampenstrom 15 mA), Wellenlänge 422.7 nm, Spaltbreite 0,7 nm; Standard Luft-Acetylen-Brenner; Deuteriumlampe zur Untergrundkompensation). Zur Datenverarbeitung ist das Spektrometer über dessen RS-232 C bidirektionelle Schnittstelle und eine serielle Schnittstelle an den Rechner 28 (IBM-AT-kompatibler Epson PC-AX Rechner) angeschlossen, der zur Auswertung der gemessenen Daten in Quick-Basic gemäß dem in Figur 3 dargestellten Flußdiagramm programmiert ist.

Zur Fließinjektion dient ein Bifok Modell 8410 Fließinjektionssystem mit einer 4-Kanal-Schlauchpumpe, Bifok/Tekator V-100 Probeninjektor und HPLC-Pumpe (Perkin-Elmer Serie 2; 3 ml/min). Die Mischwendel 38 besteht aus einem dreidimensionalen Reaktor aus Rohren von 0,35 mm I.D. Das Volumen der Probenschleife 48 betrug 100 µl.

Bei der Durchführung der Messung dient das Signal zur Betätigung des Umschalt- oder Injektionsventils 42 auch als Startsignal für die Aufnahme und Verarbeitung der Meßdaten des Atomabsorptions-Spektrometers 10. Die Meßdaten werden mit einer Zeitauflösung von 20 ms aufgenommen und mittels eines Savitzky-Golay Filters 4. Grades (A.Savitzky, M.J.E. Golay; "Smoothing and Differentiation of Data by Simplified Least Squares Procedures"; Analyt. Chem. 36, 1964; S. 1627 - 1639) über 25 Punkte geglättet.

Das Gesamtsignal wird integriert und ein Signalfenster für die Signalverarbeitung auf den Bereich beispielsweise zwischen 0,5 % und 99,5 % des integrierten Gesamtsignals eingestellt; es wird dann der Schwerpunkt des Signals als Wert eingestellt, bei dem das integrierte Signal die Hälfte seines Gesamtwertes besitzt. Zur weiteren Auswertung werden das Vergleichssignal und das Probensignal rechnerisch dergestalt verglichen, daß die Schwerpunkte beider Signale aufeinander zu liegen kommen. Die exakte relative Lage der beiden Signale wird dann so justiert, daß die Summe der Differenzen der Verhältniswerte beider Signale für die ansteigende Flanke der Signale und die absteigende Flanke der Signale minimal wird.

Auf diese Weise wird der Einfluß von Synchronisationsfehlern zwischen dem Atomabsorptions-Spektrometer 10 und dem Fließinjektionssystem, von Unregelmäßigkeiten bei der Betätigung des Umschalt- oder Injektionsventils 42 und von Schwankungen im Durchfluß der wäßrigen Trägerflüssigkeit auf die Signalauswertung weitgehend beseitigt.

Nach beispielsweise 5 Referenzmessungen wird durch Mittelwertbildung aus den Daten bzw. transienten Vergleichssignalen der Vergleichsprobe eine Referenzkurve erhalten, die als Grundlage für die Auswertung der aus Meßproben erhaltenen Signalkurven bzw. transienten Probensignalen zur analytischen Bestimmung von Calcium in den Meßproben dient. Zweckmäßigerweise werden die Referenzmessungen bei Calciumkonzentrationen vorgenommen, deren Meßsignale im vorgenannten Bereich minimaler Standardabweichungen liegen.

Die dreidimensionale Reaktorstruktur der Mischwendel 38 aus Rohren mit engem Durchtrittsquerschnitt ergibt eine nur begrenzte Dispersion der Probe in der Trägerflüssigkeit und dadurch eine verbesserte Präzision im Zeitablauf der Messung. Dadurch kann eine Regressionsanalyse entsprechend einer linearen Regression nach der Methode der kleinsten Fehlerquadrate während der Messung in Abhängigkeit von dem variablen Signal/Rausch-Verhältnis durchgeführt werden, beispielsweise durch Maßstabsänderung, z. B. von einem linearen zu einem logarithmischen Maßstab oder durch unterschiedliche Gewichtung der Einzelwerte. Es wird so möglich, die Regressionskoeffizienten auf der Basis ihrer reziproken Varianz zu gewichten, ohne die Regressionskurve in ihrem Verlauf ungünstig zu beeinflussen, und eine statistische Verteilung für die Regressionsreste zu erhalten.

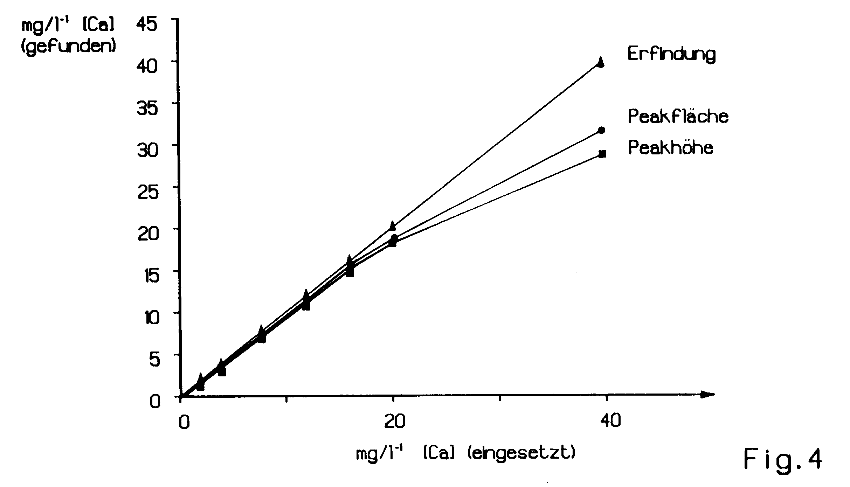

Insgesamt wird nach dem erfindungsgemäßen Verfahren eine erhebliche Verbesserung in der Konzentrationsbestimmung im Vergleich zu anderen Meßverfahren wie beispielsweise der Messung der Peakfläche oder der Peakhöhe dadurch erzielt, daß die Eichkurve über einen weit größeren Konzentrationsbereich und insbesondere auch weit außerhalb des vorerwähnten Bereichs minimaler Standardabweichung linear verläuft. Figur 4 zeigt, daß die nach dem erfindungsgemäßen Verfahren bestimmte Eichkurve über den gesamten Konzentrationsbereich von 0,4 bis 40 mg/l Calcium linear ist.

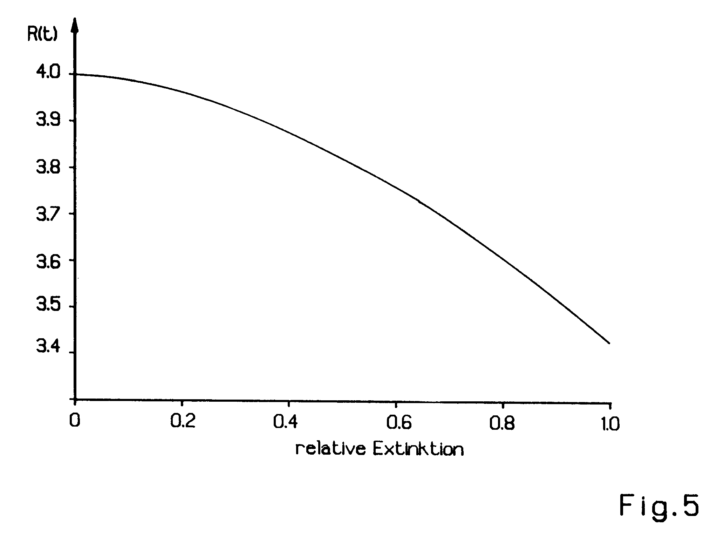

Das erfindungsgemäße Verfahren ermöglicht darüber hinaus die Bestimmung der Verhältniswerte R (t) durch Extrapolation aus dem nichtlinearen Meßbereich des Atomabsorptions-Spektrometers auf die Extinktion 0. In Figur 5 ist dies an Hand einer Kurve dargestellt, die für eine reine Calciumlösung aufgenommen wurde, deren Calciumkonzentration das Vierfache der Referenz- oder Vergleichslösung betrug. Die Kurve zeigt die Abhängigkeit des gefundenen Verhältniswertes R (t) von der relativen Extinktion, d. i. die auf den Wert 1 normierte Extinktion. Man erkennt, daß der gemessene Verhältniswert R (t) mit zunehmender relativer Extinktion immer stärker vom theoretischen Wert abweicht. Es ist aber ebenfalls aus der Kurve erkennbar, daß sich der gemessene Verhältniswert R (t) mit abnehmender relativer Extinktion immer stärker an den theoretischen Wert annähert und im Bereich niedriger relativer Extinktion praktisch dem theoretischen Wert gleich ist bzw. der auf die relative Extinktion 0 extrapolierte Wert gleich dem theoretischen Wert ist. In Abwesenheit von Matrixeffekten kann daher der Verhältniswert R (t) mit hoher Genauigkeit durch Extrapolation aus dem nichtlinearen

EP 0 384 337 B1

Meßbereich des Atomabsorptions-Spektrometers bestimmt werden und dadurch erklärt sich die in Figur 4 dargestellte, über sehr weite Konzentrationsbereiche linear verlaufende Eichkurve.

Ein weiterer, besonderer Vorteil des erfindungsgemäßen Verfahrens liegt in der Berücksichtigung von Matrixeffekten. Als Beispiel dafür zeigt die Kurve in Figur 6 die gemessenen Verhältniswerte R (t) als Funktion der relativen Extinktion bei gleicher Konzentration von Meßprobe und Referenz in Anwesenheit von 0,01 M/l Phosphat.

Man erkennt, daß schon bei niedrigen Konzentrationen, d.h. niedrigen Extinktionswerten eine massive Signal unterdrückung auftritt, die mit zunehmender Konzentration ansteigt und ihr Maximum im Signalmaximum erreicht, das bei der herkömmlichen Auswertung häufig gerade herangezogen wird. Man erkennt weiter, daß auch im Fall dieses Matrixeffektes eine Extrapolation der Verhältniswerte R (t) auf den Wert 0 der relativen Extinktion das richtige Konzentrationsverhältnis, hier den Wert 1,0 ergibt, wenn auch mit geringerer Genauigkeit als im Fall der in Figur 5 dargestellten Kurve. Diese reduzierte Genauigkeit ist eine Folge der stärkeren Steigung der Kurve bei kleinen Extinktionswerten durch die Matrixeffekte.

In der nachfolgenden Tabelle sind die nach verschiedenen Meßverfahren in Gegenwart von Phosphat gefundenen Calciumkonzentrationen angegeben:

**Calciumbestimmung in Gegenwart von Phosphat**

| Meßprobe | | Gemessene Calciumkonzentration (mg/l) | | |
|---|---|---|---|---|
| Calcium (mg/l) | Phosphat (M/l) | Peakhöhe | Peakfläche | Erfindungsgem. Verfahren |
| 12 | 0,002 | 6,92 ±0,20 | 7,30 ±0,18 | 11,84 ±0,84 |
| 12 | 0,01 | 6,84 ±0,12 | 7,25 ±0,18 | 11,62 ±0,68 |

Man erkennt aus der vorstehenden Tabelle, daß nach den bekannten Verfahren zwar mit erheblich größerer Genauigkeit gemessen, aber eine vom richtigen Wert weit abweichende Konzentration gefunden wird. Das erfindungsgemäße Verfahren ermöglicht jedoch, trotz verringerter Genauigkeit gegenüber den bekannten Verfahren, ein Meßergebnis, das innerhalb der Fehlergrenzen gleich dem richtigen Wert ist.

**Patentansprüche**

1. Verfahren zur Konzentrationsbestimmung mittels Atomabsorptions-Spektroskopie, wobei die Probe durch Fließinjektionstechnik einer kontinuierlich arbeitenden Atomisierungseinrichtung eines Atomabsorptions-Spektrometers zugeführt wird und ein transientes Ausgangssignal des Atomabsorptions-Spektrometers erzeugt, mit den Verfahrensschritten

(a) Zuführen einer Eichprobe mit bekannter Konzentration des gesuchten Elements zu einem Atomabsorptions-Spektrometer durch Fließinjektion, wobei die Konzentration des gesuchten Elements in dieser Probe in einem Bereich liegt, in dem diese Konzentration mit kleinstmöglicher Standardabweichung bestimmbar ist,

(b) Abspeichern des dabei erhaltenen transienten Vergleichssignals (52),

(c) Zuführen einer zu analysierenden Probe mit unbekannter Konzentration des gesuchten Elements zu dem Atomabsorptions-Spektrometer (10) durch Fließinjektion,

(d) Messen eines dabei erhaltenden transienten Probensignals (66),

(e) Bilden von Verhältniswerten des Probensignals (66) und des Vergleichssignals (62) zu einander entsprechenden, vorgegebenen Zeitpunkten des transienten Probesignals (66) und des transienten Vergleichssignals (52), und

(f) Bestimmen der Konzentration des gesuchten Elements in der zu analysierenden Probe aus diesen Verhältniswerten, indem die Verhältniswerte als Funktion der relativen Extinktion einer Regressionsanalyse unterworfen werden und als Ergebnis der Regressionsanalyse ein auf die Extinktion 0 extrapolierter Verhältniswert erhalten wird.

2. Verfahren nach Anspruch 1, in welchem die Verhältniswerte als Funktion der Extinktion einer gewichteten linearen Regressionsanalyse unterworfen werden und dabei Verhältniswerte mit einer einen vorgegebe-

7

EP 0 384 337 B1

nen Schwellwert überschreitenden Standardabweichung unterdrückt werden.

3. Verfahren nach Anspruch 1 oder 2, in welchem das transiente Vergleichssignal (52) und das transiente Probensignal (66) zur Bildung der Verhältniswerte jeweils auf einen vorbestimmten Schwerpunkt innerhalb eines Fensters eingestellt werden und als Schwerpunkt jedes dieser Signale 50 % des Gesamtwertes des integrierten Signals gewählt wird.

4. Verfahren nach Anspruch 3, in welchem das transiente Vergleichssignal und das transiente Probensignal, ausgehend von aufeinanderfallenden Schwerpunkten beider Signale, zeitlich relativ zueinander verschoben werden, bis die Summe der Differenzen der Verhältniswerte für die ansteigende Flanke und für die abfallende Flanke des transienten Probensignals minimal ist.

## Claims

1. A method of determining concentration by atom absorption spectroscopy, wherein the sample is supplied by flow injection to a continuously operating atomisation device in an atom absorption spectrometer and a transient output signal is generated by the atom absorption spectrometer, the steps in the method being as follows:
   a) a calibration sample having a known concentration of the desired element is supplied to an atom absorption spectrometer by flow injection, the concentration of the desired element in the sample being in a range in which the concentration can be determined with the minimum standard deviation,
   b) the resulting transient comparison signal (52) is stored;
   c) a sample for analysis and containing an unknown concentration of the desired element is supplied to the atom absorption spectrometer (10) by flow injection,
   d) a resulting transient sample signal (66) is measured,
   e) relative values of the sample signal (66) and the comparison signal (62) are obtained at preset corresponding times of the transient sample signal (66) and of the transient comparison signal (52), and
   f) the concentration of the desired element in the sample under analysis is determined from the relative values, in that the relative values as a function of the relative extinction are subjected to a regression analysis and a relative value extrapolated to extinction 0 is obtained therefrom.

2. A method according to claim 1 wherein the relative values as a function of the extinction are subjected to a weighted linear regression analysis, and relative values having a standard deviation exceeding a preset value are suppressed.

3. A method according to claim 1 or 2 wherein in order to obtain the relative values, the transient comparison signal (52) and the transient sample signal (66) are each set at a predetermined centre of gravity within a window, and the centre of gravity chosen for each signal is 50% of the total value of the integrated signal.

4. A method according to claim 3 wherein the transient comparison signal and the transient sample signal, starting from coincident centres of gravity of the two signals, are displaced in time relatively to one another until the sum of the differences of the relative values for the rising flank and for the falling flank of the transient sample signal is at a minimum.

## Revendications

1. Procédé pour déterminer une concentration par spectrométrie par absorption atomique, dans lequel l'échantillon est amené par la technique d'injection dans l'écoulement à un dispositif d'atomisation à fonctionnement continu d'un spectromètre à absorption atomique et engendre un signal de sortie transitoire du spectromètre a absorption atomique, comprenant les étapes suivantes pour le procédé :
   a) Amenée d'un échantillon d'étalonnage de l'élément cherché dont la concentration est connue à un spectromètre à absorption atomique par injection dans l'écoulement, la concentration de l'élément cherché dans cet échantillon étant située dans une fourchette dans laquelle cette concentration peut être déterminée avec l'écart-type le plus faible possible,
   b) Enregistrement du signal transitoire de comparaison (52) ainsi obtenu,
   c) Amenée d'un échantillon à analyser de l'élément cherché dont la concentration est inconnue au spectromètre à absorption atomique (10) par injection dans l'écoulement,

d) Mesure d'un signal transitoire d'échantillon (66) ainsi obtenu,

e) Formation des valeurs des rapports entre le signal d'échantillon (66) et le signal de comparaison (52) à des instants prédéterminés qui se correspondent entre eux du signal transitoire d'échantillon (66) et du signal transitoire de comparaison (52), et :

f) Détermination de la concentration de l'élément cherché dans l'échantillon à analyser à partir de ces valeurs des rapports, grâce au fait que l'on soumet les valeurs des rapports en fonction de l'extinction relative à une analyse par régression, et que l'on obtient comme résultat de l'analyse par régression une valeur du rapport qui est extrapolée jusqu'à la valeur nulle de l'extinction.

2. Procédé selon la revendication 1, dans lequel les valeurs des rapports en fonction de l'extinction sont soumises à une analyse par régression linéaire pondérée, cependant que l'on supprime les valeurs des rapports dont l'écart-type est supérieur à une valeur seuil prédéterminée.

3. Procédé selon la revendication 1 ou 2, dans lequel, en vue de la formation des valeurs des rapports, le signal transitoire de comparaison (52) et le signal transitoire d'échantillon (66) sont à chaque fois réglés sur un centre de gravité prédéterminé à l'intérieur d'une fenêtre, et que l'on choisit comme centre de gravité de chacun de ces signaux 50% de la valeur totale du signal intégré.

4. Procédé selon la revendication 3, dans lequel le signal transitoire de comparaison et le signal transitoire d'échantillon, en partant de centres de gravité coincidents pour les deux signaux, sont décalés l'un par rapport à l'autre dans le temps jusqu'à ce que la somme des différences des valeurs des rapports pour le flanc montant et pour le flanc descendant du siénal d'échantillon transitoire soit minimale.

Fig.1

EP 0 384 337 B1

Fig.2

START

Referenz
anfordern

Probe
anfordern

letzte Wiederholung

Daten
Glätten

Referenz?

nein

Daten aus Spectrometer einlesen

Peak-Fenster
einstellen

Schwerpunkt
aufsuchen

Signalverhältniswerte
bilden

Mittelwert
bilden

Regression

Ergebnisse
ausgeben

weitere
Probe?

nein

weitere
Referenz?

Fig.3

nein

ENDE

Fig. 4

EP 0 384 337 B1

Fig.5

EP 0 384 337 B1

Fig.6